# EUROPÄISCHE PATENTANMELDUNG

(11) **EP 4 494 446 A1**
(43) Veröffentlichungstag der Anmeldung: **22.01.2025**
(21) Anmeldenummer: 24179170.6
(22) Anmeldetag: 31.05.2024
(51) Int. Cl.: A01D 75/18, A01D 78/10

(54) **HEUWERBUNGSMASCHINE**

(30) Priorität: 14.07.2023 DE 102023118726
(71) Anmelder: Maschinenfabrik Bernard Krone GmbH & Co. KG, 48480 Spelle (DE)
(72) Erfinder: Johanning, Bernd, 49326 Melle (DE); Baiser, Andrej, 49076 Osnabrück (DE)
(74) Vertreter: Büscher, Christel Hedwig

(57) **Zusammenfassung**

Die vorliegende Erfindung betrifft eine Heuwerbungsmaschine, insbesondere Kreiselwender oder Kreiselschwader, mit einem Rahmen, an dem wenigstens ein Wende- oder Rechkreisel angeordnet ist, der in einer Arbeitsstellung relativ zum Rahmen um eine Kreiseldrehachse in eine Kreiseldrehrichtung antreibbar ist, und der wenigstens zwei oder mehr Zinkenarme mit Zinken zum Wenden oder Schwaden des Ernteguts aufweist, die dem Boden zumindest zeitweise zugewandt ausgerichtet sind, wobei die Zinkenarme in einer Umfangsrichtung um die Kreiseldrehachse gleichmäßig verteilt angeordnet und in eine etwa radiale Richtung zur Kreiseldrehachse ausgerichtet sind, wobei am Rahmen ein Sensor angeordnet ist, der dazu eingerichtet ist, im Betrieb des Wende- oder Rechkreisels kontinuierlich ein Vorbeiführen der Zinkenarme am Sensor zu erfassen, wobei die Heuwerbungsmaschine eine Steuerungseinrichtung umfasst, die mit dem Sensor zusammenwirkt, um anhand eines vom Sensor an die Steuerungseinheit übermittelten Messsignals des Sensors auf einen Betriebszustand des Wende- oder Rechkreisels zu schließen. Die vorliegende Erfindung betrifft weiterhin einen Arbeitszug umfassend einen Schlepper und eine solche Heuwerbungsmaschine.

## Beschreibung

Die vorliegende Erfindung betrifft eine Heuwerbungsmaschine, insbesondere Kreiselwender oder Kreiselschwader, mit einem Rahmen, an dem wenigstens ein Wende- oder Rechkreisel angeordnet ist, der in einer Arbeitsstellung relativ zum Rahmen um eine Kreiseldrehachse in eine Kreiseldrehrichtung antreibbar ist, und der wenigstens zwei oder mehr Zinkenarme mit Zinken zum Wenden oder Schwaden des Ernteguts aufweist, die dem Boden zumindest zeitweise zugewandt ausgerichtet sind, wobei die Zinkenarme in einer Umfangsrichtung um die Kreiseldrehachse gleichmäßig verteilt angeordnet und in eine etwa radiale Richtung zur Kreiseldrehachse ausgerichtet sind. Die vorliegende Erfindung betrifft weiterhin einen Arbeitszug umfassend einen Schlepper und eine solche Heuwerbungsmaschine.

Derartige Heuwerbungsmaschinen sind aus dem Stand der Technik in verschiedenen Ausführungsformen bekannt und dienen dazu, auf einer Feld- oder Wiesenfläche liegendes, landwirtschaftliches Halm- und Blattgut zur Unterstützung des Trocknungsprozesses zu streuen und zu wenden, oder zu Schwaden zusammenzuführen, um das Erntegut anschließend aufnehmen und weiterverarbeiten können. Die an den Zinkenarmen angeordneten Zinken der im Betrieb rotierend angetriebenen Wende- oder Rechkreisel greifen dafür während der Rotationsbewegung in das Erntegut ein.

Für die Qualität des Arbeitsergebnisses, das heißt die Qualität des erzeugten Futters, ist eine optimale Einstellung der Heuwerbungsmaschine entscheidend. Um diese zu erreichen, überwacht der Bediener herkömmlich eine Vielzahl Maschinenparameter durchgängig während des Ernteprozesses, wie beispielsweise die Drehzahlen der Rechkreisel, ihre Arbeitshöheneinstellung und/oder die Fahrgeschwindigkeit der Heuwerbungsmaschine. Weiterhin führt er regelmäßig Sichtprüfungen durch, um das Maschinenverhalten und das Arbeitsergebnis zu beurteilen und die Heuwerbungsmaschine gegebenenfalls manuell nachzujustieren. Dies ist für den Bediener insgesamt aufwändig und anstrengend.

Aufgabe der vorliegenden Erfindung ist es, eine Heuwerbungsmaschine dahingehend zu verbessern, dass der Überwachungsaufwand während des Ernteprozesses für den Bediener verringert ist, Schäden an der Heuwerbungsmaschine frühzeitig erkannt und Folgeschäden vermieden werden, und das Arbeitsergebnis optimiert ist.

Die Aufgabe wird gelöst mit einer Heuwerbungsmaschine mit den Merkmalen des unabhängigen Patentanspruchs 1 sowie mit einem Arbeitszug umfassend einen Schlepper und eine solche Arbeitsmaschine mit den Merkmalen des unabhängigen Patentanspruchs 8. Vorteilhafte Ausführungsformen sind den abhängigen Patentansprüchen entnehmbar.

Dafür wird eine Heuwerbungsmaschine geschaffen. Die Heuwerbungsmaschine weist einen Rahmen auf, an dem wenigstens ein Wende- oder Rechkreisel angeordnet ist. Der Wende- oder Rechkreisel ist in einer Arbeitsstellung relativ zum Rahmen um eine Kreiseldrehachse in eine Kreiseldrehrichtung antreibbar. Der Wende- oder Rechkreisel weist wenigstens zwei oder mehr Zinkenarme auf, an denen jeweils Zinken angeordnet sind.

Eine solche Heuwerbungsmaschine kann als Kreiselwender oder als Kreiselschwader ausgebildet sein. Beim Kreiselwender sind die Zinken zum Wenden, das heißt zum Streuen, des Erntegutes vorgesehen. Beim Kreiselschwader sind die Zinken demgegenüber zum Schwaden, das heißt zum Zusammenführen, des Erntegutes vorgesehen. Dafür sind die Zinken dem Boden zumindest zeitweise zugewandt ausgerichtet. Dadurch können sie in das Erntegut eingreifen und das Erntegut vom Boden oder von der Erntegutnabe abheben. Während der Rotationsbewegung löst sich das Erntegut anschließend von den Zinken und wird in eine gewünschte Richtung abgeworfen.

Die Zinkenarme sind dafür in einer Umfangsrichtung um die Kreiseldrehachse gleichmäßig verteilt angeordnet und in eine etwa radiale Richtung zur Kreiseldrehachse ausgerichtet. Dabei können sie sich sowohl geradlinig als auch bogenförmig und/oder eckig erstrecken. Der Wende- oder Rechkreisel rotiert dabei in ebenem Gelände um eine etwa vertikal ausgerichtete Rotationsachse. Gegenüber dem Kreiselwender, bei dem sich die Ausrichtung der Zinken zum Boden während einer vollen Umdrehung des Wende- oder Rechkreisels nicht ändert, werden die Zinkenarme beim Kreiselschwader während der Umdrehung gedreht, so dass die Zinken des Kreiselschwaders nur für das Abheben des Erntegutes dem Boden zugewandt ausgerichtet sind.

Die Heuwerbungsmaschine weist weiterhin einen Sensor auf. Der Sensor ist am Rahmen angeordnet. Dadurch ist er gegenüber den Zinkenarmen des Wende- oder Rechkreisels im Betrieb der Heuwerbungsmaschine, das heißt bei angetriebenem Wende- oder Rechkreisel, ortsfest angeordnet. Der Sensor ist dazu eingerichtet, im Betrieb des Wende- oder Rechkreisels kontinuierlich ein Vorbeiführen der Zinkenarme am Sensor zu erfassen.

Die Heuwerbungsmaschine weist zudem eine Steuerungseinrichtung auf. Die Steuerungseinrichtung wirkt mit dem Sensor zusammen, um anhand eines vom Sensor an die Steuerungseinheit übermittelten Messsignals des Sensors auf einen Betriebszustand des Wende- oder Rechkreisels zu schließen.

Durch Kollision mit Hindernissen kann es bei Heuwerbungsmaschinen zu einem Verbiegen der Zinkenarme oder sogar zum Abbrechen eines ganzen Zinkenarms oder weitere Schäden in einem Antriebsstrang des Wende- oder Rechkreisels kommen. Da das Erntegut dadurch nicht mehr gleichmäßig oder vollständig bearbeitet wird, bewirkt ein Verbiegen oder Fehlen eines Zinkenarms eine Verschlechterung der Qualität des Arbeitsergebnisses. Zudem bewirkt ein verbogener oder fehlender Zinkenarm eine Unwucht, durch die weitere Folgeschäden, insbesondere im Antriebsstrang und/oder einem Kreiselgetriebe des Wende- oder Rechkreisels, entstehen können.

Herkömmlich obliegt es dem Bediener der Heuwerbungsmaschine, durch Beobachtung des Maschinenverhaltens und des Arbeitsergebnissens auf solche Schäden zu schließen. Durch ihre Erfassung mittels des Sensors kann der Bediener sehr schnell reagieren und können die negativen Auswirkungen in Bezug auf das Arbeitsergebnis und/oder Folgeschäden vermieden werden.

Bei jeder vollen Umdrehung des Wende- oder Rechkreisels erfasst der Sensor jeden Zinkenarm des Wende- oder Rechkreisels genau einmal. Vorzugsweise weist das Messsignal des Sensors für das Vorbeiführen eines (jeden) Zinkenarms am Sensor (jeweils) einen Signalausschlag (Peak) auf. Vorzugsweise sind die Zinkenarme des Wende- oder Rechkreisels im Wesentlichen baugleich ausgebildet. Dadurch weist das Messsignal des Sensors im Betriebszustand Normalbetrieb bei gleichbleibender Kreiseldrehzahl einen gleichbleibenden Abstand der Signalausschläge auf.

Dabei ist es bevorzugt, dass die Heuwerbungsmaschine ein Kreiselgetriebe zum Wandeln, das heißt zum Untersetzen oder Übersetzen, einer Zapfwellendrehzahl in eine Kreiseldrehzahl umfasst. Die Steuerungseinrichtung ist bevorzugt dazu eingerichtet, eine Soll- Kreiseldrehzahl des Wende- oder Rechkreisels unter Berücksichtigung der Zapfwellendrehzahl zum Antrieb des Kreiselgetriebes und/oder eines Wandlungsverhältnisses des Kreiselgetriebes zu berechnen. Der Antrieb des Kreiselgetriebes erfolgt dabei bevorzugt mit einer Zapfwelle.

Dabei ist die Zapfwellendrehzahl eine Drehzahl einer Leistungsversorgung der Wende- oder Rechkreisel. Zur Leistungsversorgung ist die Heuwerbungsmaschine herkömmlich mit der Zapfwelle an einen Nebenantrieb (PTO, Power take off) eines sie ziehenden oder tragenden Schleppers angeschlossen. Die Zapfwellendrehzahl ist in bekannter Weise messbar.

Die Steuerungseinrichtung ist dazu eingerichtet, die Soll- Kreiseldrehzahl des Wende- oder Rechkreisels aus dem Quotienten aus der Zapfwellendrehzahl und dem Wandlungsverhältnis zu berechnen. Weiterhin ist sie dazu eingerichtet, kontinuierlich eine aktuelle Ist- Kreiseldrehzahl anhand der Anzahl der Zinkenarme des Wende- oder Rechkreisels und einer Frequenz der Signalausschläge des Messsignals pro voller Umdrehung des Wende- oder Rechkreisels zu ermitteln.

In einer bevorzugten Ausführungsform ist sie weiterhin dazu eingerichtet, die Soll-Kreiseldrehzahl mit der Ist- Kreiseldrehzahl zu vergleichen, und den Betriebszustand als einen Störbetrieb zu erfassen, wenn eine Abweichung zwischen der Soll-Kreiseldrehzahl und der Ist- Kreiseldrehzahl mehr als 10% beträgt, besonders bevorzugt von mehr als 15%.

Im Betrieb der Heuwerbungsmaschine sind die Soll- Kreiseldrehzahl und die Ist-Kreiseldrehzahl im Betriebszustand Normalbetrieb etwa gleich. Daher kann durch Vergleich der Soll- Kreiseldrehzahl mit der Ist- Kreiseldrehzahl bereits auf einen Störbetrieb, beispielsweise auf einen Schlupf, auf ein Auftreffen eines Wende- oder Rechkreisels auf ein Hindernis oder auf einen Defekt im Antriebsstrang geschlossen werden.

In einer weiteren bevorzugten Ausführungsform ist die Steuerungseinrichtung dazu eingerichtet, einen Sollabstand der Signalausschläge zu bestimmen, den Sollabstand mit einem aktuellen Istabstand benachbarter Signalausschläge des Messsignals zu vergleichen, und den Betriebszustand als einen Störbetrieb zu erfassen, wenn der Istabstand vom Sollabstand um einen Wert abweicht, der einem Winkelfehler von mehr als 8° einer Kreiselumdrehung, insbesondere von mehr als 10°, entspricht, und/oder wenn der Istabstand vom Sollabstand über mehr als eine volle Umdrehung des Wende- oder Rechkreisels abweicht.

Der Sollabstand kann dabei aus der Soll- Kreiseldrehzahl berechnet werden. Bei einem vergrößerten oder verkleinerten Abstand kann beispielsweise auf den Störbetrieb "verbogener Zinkenarm" geschlossen werden, weil der Zinkenarm früher oder später oder gar nicht in einen Erfassungsbereich des Sensors gelangt. Bei einem vergrößerten Abstand kann beispielsweise auch auf den Störbetrieb "fehlender Zinkenarm" geschlossen werden, weil der Zinkenarm gar nicht in einen Erfassungsbereich des Sensors gelangt.

Vorzugsweise ist die Steuerungseinrichtung dazu eingerichtet, ein Auftreffen des Wende- oder Rechkreisels auf ein Hindernis, einen verbogenen Zinkenarm, einen fehlenden Zinkenarm, einen Schlupf in einem Antriebsstrang des Wende- oder Rechkreisels und/oder einen Defekt im Antriebsstrang anhand des Vergleichs von Sollabstand und Istabstand als einen Betriebszustand Störbetrieb zu erfassen.

Der Sensor ist dafür bevorzugt als ein Reed-Sensor, ein induktiver Sensor, ein kapazitiver Sensor, ein Ultraschall- Sensor oder ein Lichtsensor, insbesondere Lichttaster oder Lichtschranke, ausgebildet. Die Ausführungsform als induktiver Sensor ist dabei besonders bevorzugt, da die Messung nicht durch Staub und Erntegut verfälscht oder behindert wird.

Die Aufgabe wird weiterhin gelöst mit einem Arbeitszug umfassend einen Schlepper und eine solche Heuwerbungsmaschine, wobei die Heuwerbungsmaschine am Schlepper, insbesondere mittels einer Deichsel, angehängt oder an den Schlepper, insbesondere an einen Dreipunktheber des Schleppers, angebaut ist.

Der Schlepper umfasst bevorzugt eine Schleppersteuerung, wobei die Steuerungseinrichtung dazu eingerichtet ist, der Schleppersteuerung den Störbetrieb zu übermitteln. Die Schleppersteuerung kann ebenfalls dazu eingerichtet sein, dem Schlepper Steuerungssignale zum Steuern der Heuwerbungsmaschine in Reaktion auf den Störbetrieb zu übermitteln. Dafür sind die Steuerungseinrichtung der Heuwerbungsmaschine und die Schleppersteuerung des Schleppers bevorzugt signalübertragend miteinander verbunden, beispielsweise über standardisierte Protokolle wie ISOBUS oder TIM oder ein proprietäres Protokoll.

In einer bevorzugten Ausführungsform ist die Schleppersteuerung dazu eingerichtet, dem Bediener den Betriebszustand Störbetrieb anzuzeigen. Dadurch kann der Bediener frühzeitig auf den jeweiligen Störbetrieb reagieren, und die Störung beseitigen oder Maßnahmen zur Abhilfe und/oder Vermeidung von Folgeschäden einleiten. Weiterhin bevorzugt kann die Steuerungseinrichtung eingerichtet sein, eine Hilfsmaßnahme zur Vermeidung von Folgeschäden einzuleiten, und/oder die Heuwerbungsmaschine in eine Störstellung zu überführen.

Eine solche Hilfsmaßnahme zur Vermeidung von Folgeschäden kann beispielsweise das Reduzieren der Kreiseldrehzahl oder das Beenden des Betriebs des Wende-oder Rechkreisels oder der Heuwerbungsmaschine sein. Eine weitere Maßnahme kann das Überführen der Heuwerbungsmaschine in eine Vorgewende- oder Transportstellung sein.

Alternativ kann die Steuerungseinrichtung der Heuwerbungsmaschine die Schleppersteuerung dazu veranlassen, eine Hilfsmaßnahme zur Vermeidung von Folgeschäden einzuleiten, und/oder die Heuwerbungsmaschine in eine Störstellung zu überführen. Durch eine solche Automatisierung ist eine sehr schnelle Reaktion auf einen Störbetrieb möglich. Zudem ist sie auch bei einem autonomen Arbeitszug, umfassend einen autonomen Schlepper, anwendbar.

Die Erfindung ermöglicht es, auf Basis von relativ wenigen, preisgünstigen Sensoren unterschiedliche Störzustände der Heuwerbungsmaschine frühzeitig und unabhängig von den subjektiven Eindrücken des Bedieners sensorisch zu erfassen. Hierdurch können Folgeschäden verringert werden. Ein ungenügendes Arbeitsergebnis wird verhindert. Zudem wird der Bediener durch die sensorische Erfassung entlastet.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: einen Arbeitszug umfassend einen Schlepper und eine Heuwerbungsmaschine, die an den Schlepper angehängt ist;
- Fig. 2: in (a) einen Teil einer weiteren Ausführungsform einer Heuwerbungsmaschine und in (b) einen vergrößerten Ausschnitt aus Fig. 2 (a);
- Fig. 3: in (a) - (c) jeweils Messsignale eines Sensors der Heuwerbungsmaschinen der Fig. 1 und 2.

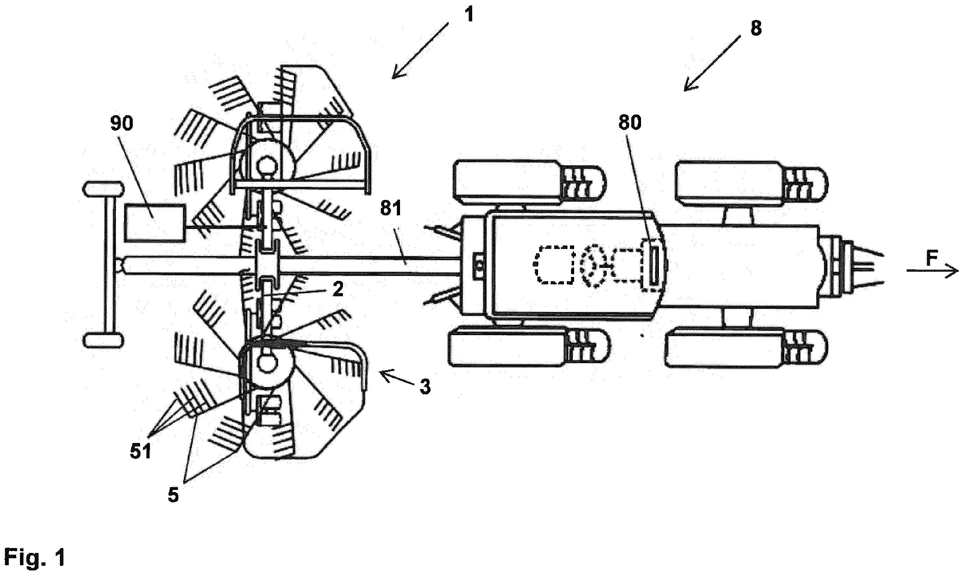

Fig. 1 zeigt einen Arbeitszug umfassend einen Schlepper 8 und eine Heuwerbungsmaschine 1, die mittels einer Deichsel 81 an den Schlepper 8 angehängt ist. Bei der Heuwerbungsmaschine handelt es sich hier um einen Kreiselschwader 1. Daher werden im Rahmen der Fig. 1 die Begriffe Heuwerbungsmaschine 1 und Kreiselschwader synonym verwendet.

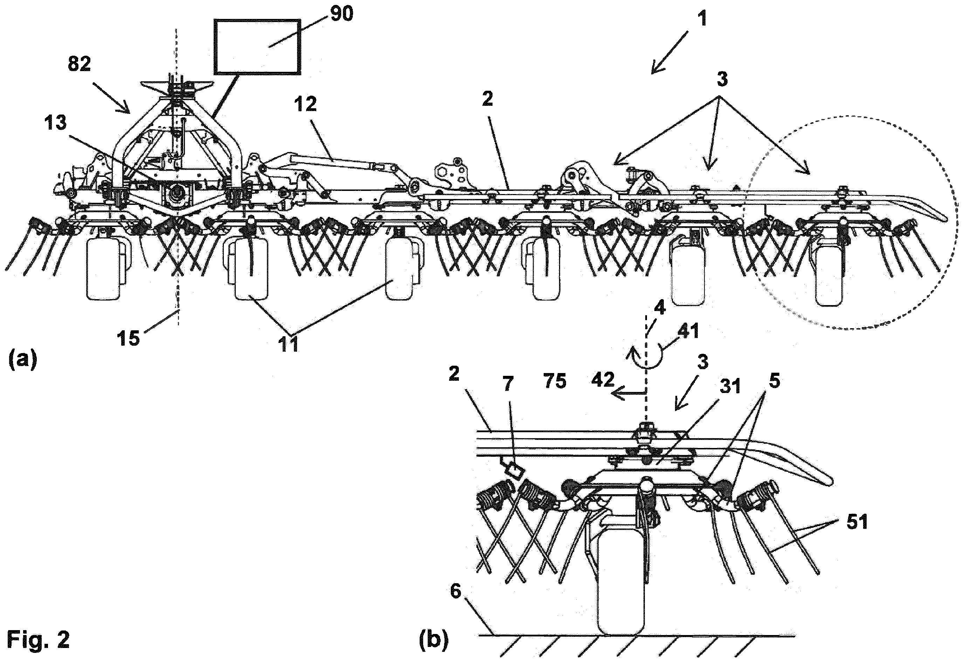

Der Kreiselschwader 1 weist hier beispielhaft zwei Wende- oder Rechkreisel 3 auf, die quer zu einer Fahrtrichtung F des Arbeitszugs nebeneinander angeordnet sind. Dafür weist er einen Rahmen 2 auf, der hier als Maschinenbalken ausgebildet ist, welcher sich quer zur Fahrtrichtung F erstreckt. Die Wende- oder Rechkreisel 3 sind an gegenüberliegenden Enden (nicht bezeichnet) des Maschinenbalkens 2 angeordnet. Sie sind dazu ausgebildet, Erntegut vom Boden 6 (s. Fig. 2) oder einer Grasnarbe aufzunehmen und in einem Schwad (nicht gezeigt) zwischen den Wende-oder Rechkreiseln 3 abzulegen. Die Wende- oder Rechkreisel 3 weisen hier daher die Funktion von Rechkreiseln auf.

Dafür sind die Wende- oder Rechkreisel 3 um eine Kreiseldrehachse 4 (s. Fig. 2), die in ebenem Gelände vertikal ausgerichtet ist, in entgegen gesetzte Kreiseldrehrichtungen 41 drehbar. Zum Aufnehmen des Erntegutes weisen sie eine Vielzahl Zinkenarme 5 auf, an denen Zinken 51 angeordnet sind (s. Fig. 2). Die Zinkenarme 5 werden während eines Betriebs des Kreiselschwaders 1 um eine etwa radial zur Kreiseldrehachse 4 ausgerichtete Achse (nicht gezeigt) gedreht, so dass die Zinken 51 des Kreiselschwaders 1 nur beim Einstechen in das Erntegut dem Boden 6 zugewandt ausgerichtet. Durch die Drehung wird verhindert, dass sie in das abgelegte Schwad eingreifen und dieses wieder zerstören.

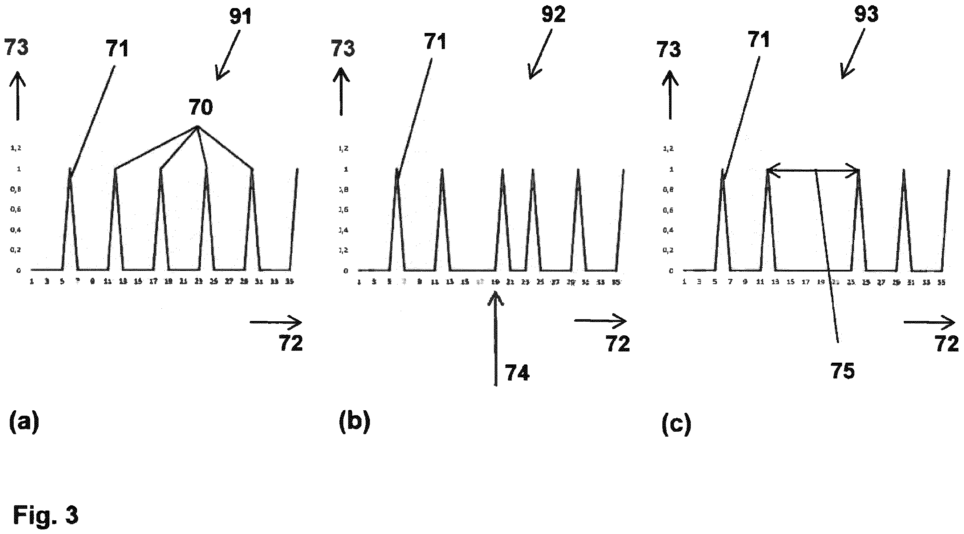

Durch Kollision mit Hindernissen kann es zu einem Verbiegen eines Zinkenarms 5 des Kreiselschwaders 1 kommen, oder sogar zum Abbrechen des Zinkenarms 5. Dadurch kann es weiterhin zu Schäden in einem Antriebsstrang (nicht gezeigt) des Wende- oder Rechkreisels 3 kommen. Um dies frühzeitig zu erkennen und Folgeschäden zu vermeiden, weist der Kreiselschwader 1 eine Steuerungseinrichtung 90 auf, die mit einem Sensor 7 (s. Fig. 2) zusammenwirkt, um aus einem Messsignal 70 (s. Fig. 3) des Sensors 7 auf einen Betriebszustand Störbetrieb 91, 92 (s. Fig. 3 (b) und (c)) zu schließen.

Der Schlepper kann mit einer Schleppersteuerung 80 zusammenwirken, um einem Bediener einen solchen Störbetrieb91, 92 anzuzeigen. Alternativ oder zusätzlich können die Steuerungseinrichtung 90 oder die Schleppersteuerung 80 dazu eingerichtet sein, eine Hilfsmaßnahme zur Vermeidung von Folgeschäden einzuleiten. Alternativ oder zusätzlich können die Steuerungseinrichtung 90 oder die Schleppersteuerung 80 dazu eingerichtet sein, den Kreiselschwader 1 in eine Störstellung zu überführen, beispielsweise in eine Vorgewende- oder Transportstellung (nicht gezeigt).

Die Funktion der Steuerungseinrichtung 90 wird im Rahmen der Fig. 2 beschrieben.

Fig. 2 zeigt einen Ausschnitt aus einer weiteren Ausführungsform einer Heuwerbungsmaschine 1, hier einen Kreiselwender. Im Rahmen der Fig. 2 werden daher die Begriffe Heuwerbungsmaschine 1 und Kreiselwender synonym verwendet.

Der Kreiselwender 1 weist eine Vielzahl Wende- oder Rechkreisel 3 auf, die quer zu einer Fahrtrichtung F des Arbeitszugs nebeneinander angeordnet sind. Dafür weist auch er einen Rahmen 2 auf, der als Maschinenbalken ausgebildet ist und sich quer zur Fahrtrichtung F erstreckt. Die Wende- oder Rechkreisel 3 sind entlang des Maschinenbalkens 2 etwa gleichweit beabstandet zueinander angeordnet.

Der Kreiselwender 1 ist in Bezug auf seine Wende- und Rechkreisel 3 symmetrisch zu einer Mittelebene 15 aufgebaut. Fig. 2 (a) zeigt nur einen rechten Arm (nicht bezeichnet) des Kreiselwenders 1 vollständig. Von einem linken Arm (nicht bezeichnet) des Kreiselwenders 1 ist lediglich ein erster Wende- oder Rechkreisel 3 dargestellt. Der Kreiselwender 1 ist mittels Aktoren 12 von einer Arbeitsstellung, die Fig. 2 zeigt, in eine Vorgewende- oder Transportstellung überführbar, in der die Arme des Kreiselwenders 1 gegenüber der Arbeitsstellung angehoben sind.

Sichtbar ist, dass sich die Wende- oder Rechkreisel 3 jeweils mit einem Tastrad 11 am Boden 6 abstützen.

Weiterhin ist mittig des Kreiselwenders 1 ein Dreipunkthubwerk 82 eines Schleppers 8 gezeigt, der den Kreiselwender 1 trägt. Sichtbar ist auch ein Zapfwellenanschluss 13 zum Anschließen des Kreiselwenders 1 an einen Nebenantrieb (PTO, nicht gezeigt) des Schleppers 8. Die Wende- und Rechkreisel 3 des Kreiselwenders 1 sind daher über eine an den Schlepper 8 anschließbare Zapfwelle (nicht gezeigt) antreibbar.

Die Wende- oder Rechkreisel 3 des Kreiselwenders 1 sind dazu ausgebildet, Erntegut vom Boden 6 oder einer Grasnarbe aufzunehmen und zu wenden. Die Wende- oder Rechkreisel 3 weisen hier daher die Funktion von Wendekreiseln auf.

Dafür sind auch die Wende- oder Rechkreisel 3 des Kreiselwenders 1 in der Arbeitsstellung relativ zum Rahmen 2 um eine Kreiseldrehachse 4 in oder gegen eine Kreiseldrehrichtung 41 drehbar. Die Kreiseldrehachse 4 ist in ebenem Gelände regelmäßig in einem (kleinen) spitzen Winkel von beispielsweise weniger als 10° zur Vertikalen ausgerichtet. Zum Aufnehmen des Erntegutes weisen auch die Wende-oder Rechkreisel 3 des Kreiselwenders 1 eine Vielzahl Zinkenarme 5 auf, an denen jeweils Zinken 51 angeordnet sind (s. Fig. 2).

Die Zinken 51 des Kreiselwenders 1 sind dem Boden 6 zugewandt ausgerichtet. Um das Erntegut optimal aufnehmen und wieder abgeben zu können, sind sie jedoch gegenüber der Kreiseldrehachse 4 in einem Winkel (nicht gezeigt) angestellt.

Die Zinkenarme 5 sind in einer Umfangsrichtung um die Kreiseldrehachse 4 gleichmäßig verteilt angeordnet und in eine etwa radiale Richtung 42 zur Kreiseldrehachse 4 ausgerichtet. Sie erstrecken sich aber nicht geradlinig sondern sind bogenförmig ausgebildet.

In einem Antriebsstrang (nicht dargestellt) des Kreiselwenders 1 weist dieser für die Wende- oder Rechkreisel 3 jeweils ein Kreiselgetriebe (nicht gezeigt) auf, welches eine Zapfwellendrehzahl der Zapfwelle in einem Wandlungsverhältnis in eine Kreiseldrehzahl des Wende- oder Rechkreisels 3 wandelt. Dabei wird die Kreiseldrehzahl beim Kreiselwender 1 üblicherweise gegenüber der Zapfwellendrehzahl verlangsamt. In Fig. 2 (b) ist ein Gehäuse 31 des Kreiselgetriebes sichtbar.

Der Kreiselwender weist für jeden Wende- oder Rechkreisel 3 jeweils einen Sensor 7 auf. Im dargestellten Ausführungsbeispiel ist ein Sensor 7 beispielhaft am äußeren Wende- oder Rechkreisel 3 gezeigt. Im Folgenden wird die Funktion des Sensors 7 beispielhaft an diesem Sensor 7 und dem ihm zugeordneten Wende- oder Rechkreisel 3 beschrieben.

Der Sensor 7 ist am Rahmen 2 befestigt, so dass er gegenüber den Zinkenarmen 31 des Wende- oder Rechkreisels 3 im Betrieb des Kreiselwenders 1, das heißt wenn sich der Wende- oder Rechkreisel 3 um seine Kreiseldrehachse 4 dreht, ortsfest angeordnet. Er ist dazu eingerichtet, im Betrieb des Wende- oder Rechkreisels 3 kontinuierlich ein Vorbeiführen jedes seiner Zinkenarme 5 am Sensor 7 zu erfassen. Dadurch erfasst der Sensor 7 ein Messsignal 71 (s. Fig. 3), bei dem jeder Zinkenarm 5 beim Passieren des Sensors 7 einen Signalausschlag 70 erzeugt. Der Sensor erfasst das Vorbeiführen der Zinkenarme 5 im Betrieb des Kreiselwenders 1 kontinuierlich, so dass ein fortlaufendes Messsignal 71 generiert wird, bei dem in einem Betriebszustand Normalbetrieb 91 (s. Fig. 3(a)) die Signalausschläge 70 gleich weit voneinander beabstandet sind, solange sich die Kreiseldrehzahl des Wende- oder Rechkreisels 3 nicht ändert.

Der Sensor 7 ist als induktiver Sensor 7 ausgebildet. Beim Annähern eines metallischen Bauteils, hier eines Zinkenarms, ändert sich ein magnetischer Fluss, der zu dem Signalausschlag 70 des Messsignals 71 führt.

Der Kreiselwender 1 weist zudem eine Steuerungseinrichtung 90 auf, die mit dem Sensor 7 zusammenwirkt, um anhand des Messsignals 71 auf den Betriebszustand des Wende- oder Rechkreisels 3 zu schließen.

Fig. 3 zeigt in (a) - (c) jeweils Messsignale 71 eines Sensors 7 der Heuwerbungsmaschinen 1 der Fig. 1 und 2.

Fig. 3 (a) zeigt das Messsignal 71 des Sensors 7 in einem Koordinatensystem im Betriebszustand Normalbetrieb 91. Auf der X-Achse ist ein Drehwinkel 72, auf der Y-Achse ein Betrag 73 des Messsignals 71 aufgetragen.

Jeder Zinkenarm 5 wird durch den dem Wende- oder Rechkreisel 3 zugeordneten Sensor 7 als Signalausschlag 70 erfasst. Bei gleichbleibender Kreiseldrehzahl ist ein Istabstand zwischen den Signalausschlägen 70 etwa konstant. Die Ist-Kreiseldrehzahl des Wende- oder Rechkreisels 3 entspricht zudem der berechneten Soll- Kreiseldrehzahl.

Fig. 3 (b) zeigt das Messsignal 71 des Sensors 7 im Betriebszustand Störbetrieb, hier bei verbogenem Zinkenarm 92. Der Zinkenarm 5 ist durch die Verbiegung später in einen Erfassungsbereich des Sensors 7 gelangt und wird daher bei einem späteren Drehwinkel 74 erfasst.

Fig. 3 (c) zeigt das Messsignal 71 des Sensors 7 ebenfalls im Betriebszustand Störbetrieb, hier aber bei fehlendem Zinkenarm 93. Der Zinkenarm 5 kann nicht mehr in den Erfassungsbereich des Sensors 7 gelangen. Ein Istabstand 75 zwischen benachbarten Signalausschlägen 70 ist hier etwa doppelt so groß wie im Normalbetrieb 91.

Durch Vergleich der Soll- Kreiseldrehzahl mit der Ist- Kreiseldrehzahl kann bei einer Abweichung, die mehr als 10% beträgt und/oder über mehr als eine vollständige Kreiselumdrehung anhält, auf einen Schlupf oder einen Defekt im Antriebsstrang des Wende- oder Rechkreisels 3 geschlossen werden.

Ein Defekt im Antriebsstrang kann beispielsweise auch bewirken, dass sich der Wende- oder Rechkreisel 3 gar nicht mehr dreht, obwohl an der Zapfwelle eine Zapfwellendrehzahl anliegt. Dies ist als Störbetrieb (nicht gezeigt) mit dem Sensor 7 erfassbar, da das Messsignal 71 dann keine Signalausschläge 70 aufweist.

Ein Schlupf im Antriebsstrang kann auch dazu führen, dass eine Drehzahländerung, beispielsweise nach einem Einschalten des Nebenantriebs des Schleppers 8, zu einem verzögerten Erreichen der Soll- Kreiseldrehzahl führt.

Ein Nachlaufen des Wende- oder Rechkreisels 3, beispielsweise bei eingebautem Freilauf, kann erfasst werden, indem der Wende- oder Rechkreisel 3 nach Abschalten des Nebenantriebs noch dreht. Dies ist als Störbetrieb (nicht gezeigt) mit dem Sensor 7 erfassbar, da das Messsignal 71 dann trotz abgeschaltetem Nebenantrieb noch Signalausschläge 70 aufweist.

## Patentansprüche

1. Heuwerbungsmaschine (1), insbesondere Kreiselwender oder Kreiselschwader, mit einem Rahmen (2), an dem wenigstens ein Wende- oder Rechkreisel (3) angeordnet ist, der in einer Arbeitsstellung relativ zum Rahmen (2) um eine Kreiseldrehachse (4) in eine Kreiseldrehrichtung (41) antreibbar ist, und der wenigstens zwei oder mehr Zinkenarme (5) mit Zinken (51) zum Wenden oder Schwaden des Ernteguts aufweist, die dem Boden (6) zumindest zeitweise zugewandt ausgerichtet sind, wobei die Zinkenarme (5) in einer Umfangsrichtung um die Kreiseldrehachse (4) gleichmäßig verteilt angeordnet und in eine etwa radiale Richtung (42) zur Kreiseldrehachse (4) ausgerichtet sind, wobei am Rahmen (2) ein Sensor (7) angeordnet ist, der dazu eingerichtet ist, im Betrieb des Wende- oder Rechkreisels (3) kontinuierlich ein Vorbeiführen der Zinkenarme (5) am Sensor (7) zu erfassen, wobei die Heuwerbungsmaschine (1) eine Steuerungseinrichtung (90) umfasst, die mit dem Sensor (7) zusammenwirkt, um anhand eines vom Sensor (7) an die Steuerungseinheit (90) übermittelten Messsignals (71) des Sensors (7) auf einen Betriebszustand (91 - 93) des Wende- oder Rechkreisels (3) zu schließen.

2. Heuwerbungsmaschine (1) nach Anspruch 1, **dadurch gekennzeichnet, dass** das Messsignal (7) für das Vorbeiführen eines Zinkenarms (5) am Sensor (7) einen Signalausschlag (70) aufweist.

3. Heuwerbungsmaschine (1) nach einem der vorherigen Ansprüche, **dadurch gekennzeichnet, dass** sie ein Kreiselgetriebe zum Wandeln einer aktuellen Zapfwellendrehzahl in eine Kreiseldrehzahl umfasst, wobei die Steuerungseinrichtung (90) dazu eingerichtet ist, eine Soll- Kreiseldrehzahl des Wende- oder Rechkreisels (3) unter Berücksichtigung einer Zapfwellendrehzahl zum Antrieb des Kreiselgetriebes und/oder eines Wandlungsverhältnisses des Kreiselgetriebes zu berechnen.

4. Heuwerbungsmaschine (1) nach einem der vorherigen Ansprüche, **dadurch gekennzeichnet, dass** die Steuerungseinrichtung (90) dazu eingerichtet ist, kontinuierlich eine aktuelle Ist- Kreiseldrehzahl anhand der Anzahl der Zinkenarme (5) des Wende- oder Rechkreisels (3) und einer Frequenz der Signalausschläge (70) des Messsignals (71) pro voller Umdrehung des Wende-oder Rechkreisels (3) zu ermitteln.

5. Heuwerbungsmaschine (1) nach einem der vorherigen Ansprüche, **dadurch gekennzeichnet, dass** die Steuerungseinrichtung (90) dazu eingerichtet ist, die Soll- Kreiseldrehzahl mit der Ist- Kreiseldrehzahl zu vergleichen, und den Betriebszustand als einen Störbetrieb zu erfassen, wenn eine Abweichung zwischen der Soll- Kreiseldrehzahl und der Ist- Kreiseldrehzahl mehr als 10% beträgt, insbesondere mehr als 15%.

6. Heuwerbungsmaschine (1) nach einem der vorherigen Ansprüche, **dadurch gekennzeichnet, dass** die Steuerungseinrichtung (90) dazu eingerichtet ist, einen Sollabstand der Signalausschläge (70) zu bestimmen, den Sollabstand mit einem aktuellen Istabstand benachbarter Signalausschläge (70) des Messsignals (7) zu vergleichen, und den Betriebszustand als einen Störbetrieb zu erfassen, wenn der Istabstand vom Sollabstand um einen Wert abweicht, der einem Winkelfehler von mehr als 8° einer Kreiselumdrehung, insbesondere von mehr als 10°, entspricht, und/oder wenn der Istabstand vom Sollabstand über mehr als eine volle Umdrehung des Wende- oder Rechkreisels (3) abweicht.

7. Heuwerbungsmaschine (1) nach einem der vorherigen Ansprüche, **dadurch gekennzeichnet, dass** die Steuerungseinrichtung (90) dazu eingerichtet ist, ein Auftreffen auf ein Hindernis, einen verbogenen Zinkenarm (5), einen fehlenden Zinkenarm (5), einen Schlupf in einem Antriebsstrang des Wende- oder Rechkreisels und/oder einen Defekt im Antriebsstrang anhand des Vergleichs von Sollabstand und Istabstand als Störbetrieb zu erfassen.

8. Heuwerbungsmaschine (1) nach einem der vorherigen Ansprüche, **dadurch gekennzeichnet, dass** der Sensor (7) als ein Reed-Sensor, ein induktiver Sensor, ein kapazitiver Sensor, ein Ultraschall- Sensor oder ein Lichtsensor, insbesondere Lichttaster oder Lichtschranke, ausgebildet ist.

9. Heuwerbungsmaschine (1) nach einem der vorherigen Ansprüche, **dadurch gekennzeichnet, dass** sie mehrere Wende- oder Rechkreisel (3) umfasst, wobei jedem der Wende- oder Rechkreisel (3) jeweils ein Sensor (7) zugeordnet ist.

10. Arbeitszug mit einem Schlepper (8) und einer Heuwerbungsmaschine (1) nach einem der vorherigen Ansprüche, wobei die Heuwerbungsmaschine (1) am Schlepper (8) angehängt oder an den Schlepper (8) angebaut ist.

11. Arbeitszug nach Anspruch 7, **dadurch gekennzeichnet, dass** der Schlepper (1) eine Schleppersteuerung (80) umfasst, und die Steuerungseinrichtung (90) dazu eingerichtet ist, der Schleppersteuerung (80) den Störbetrieb zu übermitteln.

12. Arbeitszug nach einem der Ansprüche 7 - 8, **dadurch gekennzeichnet, dass** die Schleppersteuerung (80) dazu eingerichtet ist, dem Bediener den Störbetrieb anzuzeigen, eine Hilfsmaßnahme zur Vermeidung von Folgeschäden einzuleiten, und/oder die Heuwerbungsmaschine (1) in eine Störstellung zu überführen.
